# EUROPÄISCHE PATENTSCHRIFT

(11) **EP 1 172 264 B1**
(45) Veröffentlichungstag und Bekanntmachung des Hinweises auf die Patenterteilung: **28.12.2005**
(21) Anmeldenummer: 01115767.4
(22) Anmeldetag: 10.07.2001
(51) Int. Cl.: B60R 21/20, B60R 21/16

(54) **Gassackrückhalteeinrichtung mit Vorderwand und Einbuchtung**
Airbag retaining device with a front wall and a recess
Système de retenue par coussin gonflable présentant paroi frontale et renfoncement

(30) Priorität: 13.07.2000 DE 20012077 U; 28.12.2000 DE 10065462
(43) Veröffentlichungstag der Anmeldung: 16.01.2002
(73) Patentinhaber: TRW Automotive Safety Systems GmbH, 63743 Aschaffenburg (DE)
(72) Erfinder: Frisch, Ralph, 63776 Mömbris (DE)
(74) Vertreter: Kitzhofer, Thomas

(56) Entgegenhaltungen:
- WO-A-97/34783
- DE-A- 2 315 070
- DE-A- 4 010 767
- DE-A- 19 749 914
- DE-A- 19 816 080
- DE-U- 29 921 744
- US-A- 4 878 689
- US-A- 6 042 147

## Beschreibung

Die Erfindung betrifft eine Gassack-Rückhalteeinrichtung, mit einem Gassackmodul, das einen Gasgenerator und einen Gassack mit einer Gassackwand hat, die eine dem zurückzuhaltenden Insassen zugewandte Vorderwand umfaßt, die einen Zentrumsabschnitt mit einer, bezogen auf den aufgeblasenen Zustand, Einbuchtung aufweist, mit einer Modulabdeckung, die beim Aktivieren des Gassacks eine Austrittsöffnung freigibt, und mit einer Befestigungseinrichtung für den Zentrumsabschnitt, mit dem dieser auch im aufgeblasenen Zustand des Gassacks an einer freien, vorzugsweise an jeglicher Bewegung aus dem Gassackmodul heraus gehindert wird, so daß die Einbuchtung mit einer diese umgebenden ringförmigen Gassackkammer gebildet wird.

Eine solche Gassack-Rückhalteeinrichtung ist aus der DE 197 49 914 A1 bekannt. Bei dieser Einrichtung, die einen sogenannten ringförmigen Gassack aufweist, ist eine sogenannte Führungshülse in der Mitte des Gassackmoduls angeordnet. Die Führungshülse ist auf der Rückseite fest mit dem Gassackmodulboden verbunden und auf der Vorderseite fest mit der Modulabdeckung. Beim Öffnen der Modulabdeckung bleibt ein mittlerer Abschnitt der Modulabdeckung stehen. Auch eine Befestigungseinrichtung mit einer separaten Mutter und einem Deckel, der die Mutter nach außen nicht sichtbar macht, ist gezeigt.

Die WO-A-97/34783 zeigt ebenfalls eine gattungsgemäße Gassack-Rückhalteeinrichtung bei der ein mittiges Multifunktionsteil vorgesehen ist. Der innere Rand der Abdeckung eines Gassackmoduls ist in einem Hinterschnitt des Multifunktionsteils so angeordnet, daß sich die Abdeckung erst im Auslösefall des Gassacks vom Multifunktionsteil löst, um eine Entfaltung des Gassacks zu ermöglichen.

Die DE-A-198 16 080 offenbart einen Mehrkammergassack in der Art eines Trichtergassacks. Dieser Mehrkammergassack weist ausgehend von der aufprallaufnehmenden Außenkontur des aufgeblasenen Gassacks wenigstens einen trichterförmigen Freiraum auf, der sich bis zu einem Modulabdeckungsbereich erstreckt. Der trichterförmige Freiraum wird dadurch gebildet, daß ein Wandbereich des Gassacks am Trichterboden fest mit der Modulabdeckung verbunden ist.

In der DE-U-299 21 744 ist ein mittlerer Abschnitt einer Modulabdeckung so ausgebildet, daß Emblem- oder Zierteile auch bei hohen Beschleunigungen sicher mit dem mittleren Abschnitt der Modulabdeckung verbunden bleiben und nicht als lose Teile umherfliegen.

Die Erfindung schafft eine Gassack-Rückhalteeinrichtung, bei der die Befestigungseinrichtung einfacher ausgebildet ist als im Stand der Technik, weniger Bauraum benötigt und die Konstruktion der Modulabdeckung weniger aufwendig gestaltet werden kann. Dies wird bei einer Gassack-Rückhalteeinrichtung der eingangs genannten Art dadurch erreicht, daß die Befestigungseinrichtung eine in die Modulabdeckung integrierte, am Modul befestigte Verstärkungseinlage aus einem Blech aufweist, von der wenigstens ein Halteteil absteht, das aus der Modulabdeckung herausragt, wobei die Verstärkungseinlage am Gasgenerator oder an einem, den Gasgenerator umgebenden Bauteil befestigt ist, so daß die Modulabdeckung im Bereich des Zentrumsabschnitts beim Öffnen stehenbleibt und nur der angrenzende Teil nach außen klappt, um die Austrittsöffnung freizugeben, und wobei der Zentrumsabschnitt zwischen der vorderen Stirnwand des Gasgenerators bzw. des den Gasgenerator umgebenden Bauteils und der Modulabdeckung geklemmt ist.

Die Verstärkungseinlage ist, wie gesagt, in die Modulabdeckung integriert, indem sie beim Schäumen oder Spritzen der Modulabdeckung in die Schaum- oder Spritzform eingelegt wurde. Die Modulabdeckung bleibt somit im Bereich des Zentrumsabschnitts beim Öffnen stehen, und nur der angrenzende Teil klappt nach außen, um die Austrittsöffnung freizugeben. Probleme der Anbindung der Befestigungseinrichtung an die Modulabdeckung treten nicht auf.

Von der Blecheinlage können Halteteile, wie z.B. Gewindebolzen, Blechlappen, Nietbolzen oder Abschnitte eines Bajonettverschlusses, abstehen, die aus der Modulabdeckung herausragen und über die die Befestigungseinrichtung am Modul arretiert wird. Die Gewindebolzen werden z.B. verschraubt, die Blechlappen umgebogen, die Nietbolzen taumelvernietet und der Bajonettverschluß geschlossen, um die Modulabdeckung samt Zentrumsabschnitt bleibend am Modul zu arretieren.

Gemäß einer Ausführungsform ist die Verstärkungseinlage an einem über den Gasgenerator gestülpten topfförmigen Diffusor oder einem den Gasgenerator umgebenden Bauteil, z.B. einem Bügel, befestigt. Hier wird der Zentrumsabschnitt zwischen der vorderen Stirnwand des Diffusors und der Modulabdeckung geklemmt. Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Längsschnittansicht durch eine Gassack-Rückhalteeinrichtung gemäß der Erfindung, die in ein Fahrzeuglenkrad integriert ist,
- Figur 2 eine vergrößerte Ansicht der in Figur 1 gezeigten Einrichtung im Bereich des Gasgenerators bei geschlossenem Modul,
- Figur 3 eine Ansicht entsprechend Figur 2 einer geringfügig modifizierten Ausführungsform, und
- Figuren 4a bis 4c Ansichten dreier weiterer Ausführungsformen der Einrichtung im Bereich des Gasgenerators.

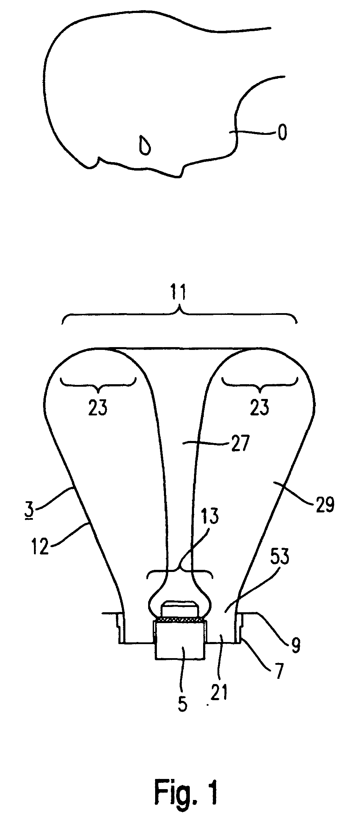

In Figur 1 ist eine im Fahrzeuglenkrad oder im Armaturenbrett auf der Beifahrerseite untergebrachte, zur Rückhaltung von Kopf und Oberkörper dienende Gassack-Rückhalteeinrichtung mit einem Gassackmodul gezeigt. Das Gassackmodul hat einen Gassack 3, einen Gasgenerator 5, ein Modulgehäuse 7, in dem Gassack 3 und Gasgenerator 5 untergebracht sind, und eine Modulabdeckung 9.

Der Gassack besteht aus einer Gassackwand aus Gewebematerial, mit einer Vorderwand 11, die dem Insassen im aufgeblasenen Zustand zugewandt ist, und die der Insasse kontaktiert. Ferner ist eine Rückwand 12 vorgesehen, die aus einem separaten Gewebeteil bestehen kann, das eine Einlaßöffnung 21 aufweist, über die der Gasgenerator 5 in den Gassack 3 eingeführt wird. Die Vorderwand hat einen vorderen, ringförmigen Abschnitt 23 und einen sogenannten Zentrumsabschnitt 13, der durch eine tiefe Einbuchtung 27 definiert ist. Der Abschnitt 23 wird von einem Insassen 0 kontaktiert und dient der Rückhaltung. Im eingebauten Zustand ist die Rückhalteeinrichtung um 90° im Uhrzeigersinn gedreht eingebaut. Der Zentrumsabschnitt 13 ist durch eine Befestigungseinrichtung bleibend am Gassackmodul befestigt, so daß er sich nicht wie der Rest des Gassacks beim Entfalten nach außen in Richtung zum Insassen bewegen kann. Dadurch entsteht eine ringförmige Gassackkammer 29, in die Gas geblasen wird. Die Einbuchtung 27 muß im aufgeblasenen Zustand jedoch nicht durchgehend offen sein, sondern kann auch abschnittsweise geschlossen sein, indem gegenüberliegende Wandungsabschnitte des Gassacks aneinander anliegen. Gas strömt über die Gassackkammer 29 jedoch nicht in die Einbuchtung 27 ein.

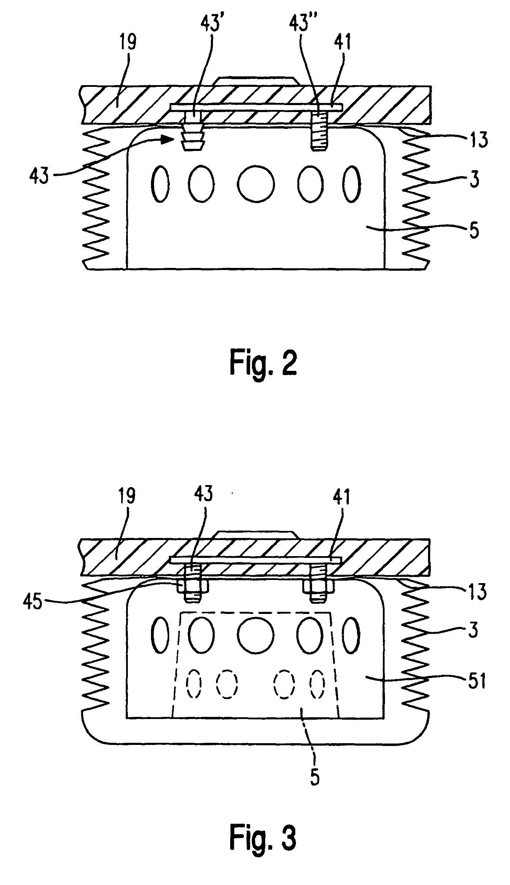

Der Zentrumsabschnitt 13 der Gassackwand ist zwischen der Modulabdeckung 19 (siehe Figur 2) und der oberen Stirnwand des Gasgenerators 5 geklemmt. Als Befestigungseinrichtung dient eine in die Modulabdeckung integrierte, umschäumte Verstärkungseinlage in Form eines Blechs 41, das bei der Herstellung der Modulabdeckung 19 umschäumt oder z.B. mit einem thermoplastischen Material umspritzt wurde. Aus der Modulabdeckung 19 stehen mit dem Blech 41 verbundene Halteteile in Form von Rast- oder Gewindebolzen 43 vor, die am Gasgenerator 5 befestigt sind. Der linke Bolzen 43' ist ein Rast- und der rechte Bolzen 43" ein Gewindebolzen.

Die Ausführungsform nach Figur 3 entspricht im wesentlichen der in Figur 2 gezeigten, wobei aber um den Gasgenerator 5 herum noch ein topfförmiger Diffusor 51, der ein den Gasgenerator 5 umgebendes, am Modul starr befestigtes Bauteil bildet, gestülpt ist, an dem die Gewindebolzen 43 mit Muttern 45 verschraubt sind. Der Zentrumsabschnitt 13 ist somit zwischen der Modulabdeckung 19 und der Stirnwand des Diffusors 51 geklemmt.

Beim Entfalten des Gassacks reißt dieser die Modulabdeckung 19 auf (siehe Figur 1), so daß sich eine ringförmige Austrittsöffnung 53 ergibt, über die der Gassack das Modul verläßt. Der Zentrumsabschnitt 13 wird an einer Bewegung durch die Befestigungseinrichtung gehindert, so daß die Einbuchtung 27 entsteht.

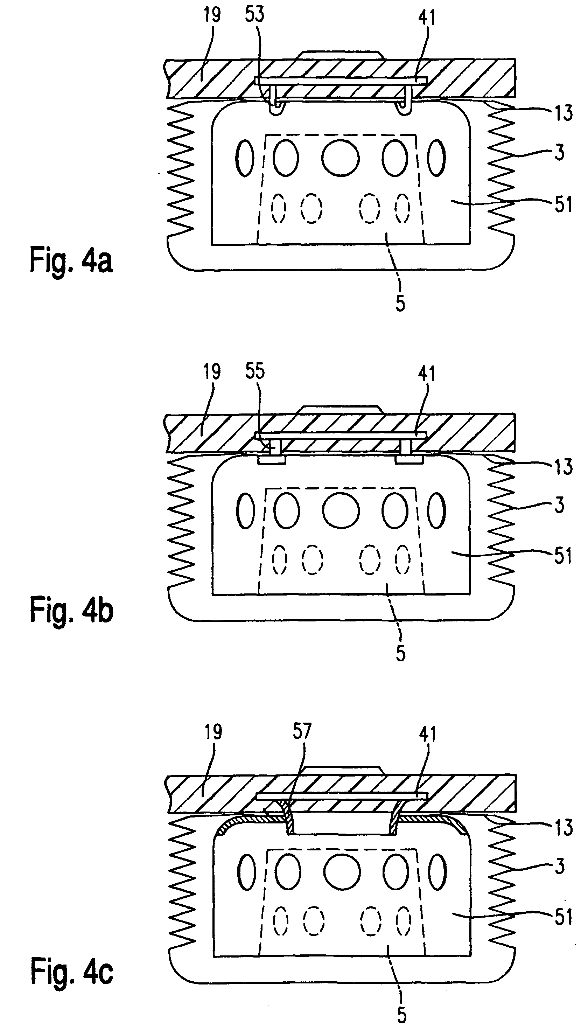

Das Halteteil kann auch ein vorstehender, am freien Ende umgebogener Blechlappen 53 (Fig. 4a), ein taumelvernieteter Nietbolzen 55 (Fig. 4b) oder ein Abschnitt eines Bajonettverschlusses 57 (Fig. 4c) sein, bei dem z.B. der Diffusor 51 eine entsprechende Gegenöffnung hat.

Der Gassack, der sich vorzugsweise schräg radial nach außen entfaltet, weist gute Rückhaltewerte auf.

## Patentansprüche

1. Gassack-Rückhalteeinrichtung, mit
einem Gassackmodul, das einen Gasgenerator (5) und einen Gassack (3) mit einer Gassackwand hat, die eine dem zurückzuhaltenden Insassen zugewandte Vorderwand (11) umfaßt, die einen Zentrumsabschnitt (13) mit einer, bezogen auf den aufgeblasenen Zustand, Einbuchtung (27) aufweist,
einer Modulabdeckung (19), die beim Aktivieren des Gassacks eine Austrittsöffnung (53) freigibt, und
einer Befestigungseinrichtung für den Zentrumsabschnitt (13), mit der dieser auch im aufgeblasenen Zustand des Gassacks (3) an einer freien Bewegung aus dem Gassackmodul heraus gehindert wird, um die Einbuchtung (27) mit einer diese umgebenden ringförmigen Gassackkammer (29) zu bilden,
**dadurch gekennzeichnet, daß** die Befestigungseinrichtung eine in die Modulabdeckung (19) integrierte, am Gassackmodul befestigte Verstärkungseinlage aus einem Blech (41) aufweist, von der wenigstens ein Halteteil absteht, das aus der Modulabdeckung (19) herausragt,
wobei die Verstärkungseinlage am Gasgenerator (5) oder an einem, den Gasgenerator (5) umgebenden Bauteil befestigt ist, so daß die Modulabdeckung im Bereich des Zentrumsabschnitts beim Öffnen stehenbleibt und nur der angrenzende Teil nach außen klappt, um die Austrittsöffnung freizugeben,
und wobei der Zentrumsabschnitt (13) zwischen der vorderen Stirnwand des Gasgenerators (5) bzw. des den Gasgenerator umgebenden Bauteils und der Modulabdeckung (19) geklemmt ist.

2. Gassack-Rückhalteeinrichtung nach Anspruch 1, **dadurch gekennzeichnet, daß** das Blech (41) umschäumt oder umspritzt ist und die Umschäumung oder Umspritzung die Modulabdeckung (19) bildet.

3. Gassack-Rückhalteeinrichtung nach Anspruch 1 oder 2, **dadurch gekennzeichnet, daß** das Halteteil ein Gewindebolzen (43), ein Blechlappen, ein Nietbolzen oder ein Abschnitt eines Bajonettverschlusses ist.

4. Gassack-Rückhalteeinrichtung nach einem der Ansprüche 1 bis 3, **dadurch gekennzeichnet, daß** das Bauteil ein über den Gasgenerator (5) gestülpter, topfförmiger Diffusor (51) ist.

## Claims

1. A gas bag restraint device, comprising
a gas bag module which has a gas generator (5) and a gas bag (3) with a gas bag wall having a front wall (11) facing the occupant to be restrained, the front wall (11) having a center section (13) with an indentation (27), as related to the inflated state,
a module covering (19) which on activation of the gas bag exposes an outlet opening (53), and
a fastening device for the center section (13), by means of which the latter is prevented from freely moving out of the gas bag module even in the inflated state of the gas bag (3), in order to form the indentation (27) with an annular gas bag chamber (29) surrounding it,
**characterized in that** the fastening device has a reinforcement insert which is made of a sheet metal part (41), is integrated into the module covering (19) and is fastened to the gas bag module, at least one holding piece, which protrudes from the module covering (19), projecting from the reinforcement insert,
the reinforcement insert being fastened to the gas generator (5) or to a component surrounding the gas generator (5), so that during opening the module covering remains stationary in the region of the center section and only the adjoining part folds outwards to expose the outlet opening,
and the center section (13) being clamped between the front end wall of the gas generator (5) or of the component surrounding the gas generator and the module covering (19).

2. The gas bag restraint device according to claim 1, **characterized in that** the sheet metal part (41) is encased by foaming or by injection molding and the foam casing or injection-molded casing forms the module covering (19).

3. The gas bag restraint device according to claim 1 or 2, **characterized in that** the holding piece is a threaded bolt (43), a sheet metal tongue, a rivet bolt or a section of a bayonet closure.

4. The gas bag restraint device according to any of claims 1 to 3, **characterized in that** the component is a cup-shaped diffusor (51) placed over the gas generator (5).

## Revendications

1. Dispositif de retenue à coussin à gaz, comportant
un module de coussin à gaz qui a un générateur de gaz (5) et un coussin à gaz (3) avec une paroi de coussin à gaz qui comprend une paroi antérieure (11) tournée vers le passager à retenir, laquelle présente un tronçon central (13) avec un creux (27), à l'état de gonflage,
un couvercle de module (19) qui dégage une ouverture de sortie (53) lors de l'activation du coussin à gaz, et
un dispositif de fixation pour le tronçon central (13), par lequel ce dernier est empêché de se mouvoir librement hors du module de coussin à gaz, même à l'état de gonflage du coussin à gaz (3), pour former le creux (27) avec une chambre de coussin à gaz (29) annulaire entourant celui-ci,
**caractérisé en ce que** le dispositif de fixation présente un insert de renforcement réalisé en une tôle (41), qui est intégré dans le couvercle de module (19) et fixé sur le module de coussin à gaz, et depuis lequel dépasse au moins une partie de retenue qui fait saillie hors du couvercle de module (19),
la couche de renforcement étant fixée sur le générateur de gaz (5) ou sur un composant entourant le générateur de gaz (5), de telle sorte que pendant l'ouverture, le couvercle de module s'arrête dans la région du tronçon central et seulement la partie adjacente se rabat vers l'extérieur pour dégager l'ouverture de sortie,
et le tronçon central (13) étant serré entre la paroi frontale antérieure du générateur de gaz (5), ou du composant entourant le générateur de gaz, et le couvercle de module (19).

2. Dispositif de retenue à coussin à gaz selon la revendication 1, **caractérisé en ce que** la tôle (41) est entourée de mousse ou enrobée par extrusion, et l'entourage de mousse ou l'enrobage par extrusion forme le couvercle de module (19).

3. Dispositif de retenue à coussin à gaz selon la revendication 1 ou 2, **caractérisé en ce que** la partie de retenue est un boulon fileté (43), une patte en tôle, un boulon rivé ou un tronçon d'une fermeture à baïonnette.

4. Dispositif de retenue à coussin à gaz selon l'une des revendications 1 à 3, **caractérisé en ce que** le composant est un diffuseur (51) en forme de pot qui coiffe le générateur de gaz (5).
